# EUROPEAN PATENT APPLICATION

(11) **EP 4 671 514 A1**
(43) Date of publication of application: **31.12.2025**
(21) Application number: 24184030.5
(22) Date of filing: 24.06.2024
(51) Int. Cl.: F02B 75/04, F16C 3/28

(54) **AN INTERNAL COMBUSTION ENGINE AND A CAGE**

(71) Applicant: Gomecsys B.V., 1411 AR Naarden (NL)
(72) Inventor: DE GOOIJER, Lambertus Hendrik, 1401 EP BUSSUM (NL)
(74) Representative: De Vries & Metman

(57) **Abstract**

An internal combustion engine (1) including variable compression ratio comprises a crankcase, a crankshaft (3) including a main portion (2) which is supported by the crankcase and rotatable thereto about a crankshaft axis (6), a crankpin (4) and a crank web (5) located between the main portion (2) and the crankpin (4) in longitudinal direction of the crankshaft axis (6), a connecting rod (12) including a big end (13) and an eccentric member (8) which is mounted on the crankpin (4) and rotatable with respect to the crankpin (4) about a crankpin axis (7). The eccentric member (8) comprises a bearing portion (9) including a centreline (10) parallel to the crankpin axis (7) and an external eccentric member gear (11) between the bearing portion (9) and the crank web (5) of the crankshaft (3) as seen in longitudinal direction of the crankshaft axis (6). The eccentric member gear (11) has a larger diameter than the bearing portion (9) and is drivably connected to a gear train (18, 19) for rotating the eccentric member (8) with respect to the crankpin (4). The big end (13) is rotatably mounted on the bearing portion (9) through big end rollers (14) which are held at a distance from each other in circumferential direction about the centreline (10) of the bearing portion (9) through a cage (15). The cage has opposite retaining members (16a, 16b) for holding the big end rollers (14) in axial direction thereof and a big end abutment (17) between the eccentric member gear (11) and the big end (13) in axial direction of the crankpin axis (7) so as to stop a movement of the big end (13) with respect to the big end rollers (14) in a direction from the bearing portion (9) towards the eccentric member gear (11).

## Description

The present invention relates to an internal combustion engine including variable compression ratio comprising a crankcase, a crankshaft including a main portion which is supported by the crankcase and rotatable thereto about a crankshaft axis, a crankpin and a crank web located between the main portion and the crankpin in longitudinal direction of the crankshaft axis, a connecting rod including a big end, an eccentric member which is mounted on the crankpin and rotatable with respect to the crankpin about a crankpin axis, wherein the eccentric member comprises a bearing portion including a centreline parallel to the crankpin axis and an external eccentric member gear between the bearing portion and the crank web of the crankshaft as seen in longitudinal direction of the crankshaft axis, which eccentric member gear has a larger diameter than the bearing portion and is drivably connected to a gear train for rotating the eccentric member with respect to the crankpin.

Such an internal combustion engine is known from EP 2 620 614 of the same applicant. The known internal combustion engine provides the opportunity to vary its compression ratio by turning the eccentric member about the crankpin at a virtual standstill of the crankshaft. Increasing the compression ratio under part-load conditions of the internal combustion engine leads to improved efficiency, i.e. a lower fuel consumption.

An object of the invention is to provide a further improved internal combustion engine.

This object is accomplished with the internal combustion engine according to the invention which is characterized in that the big end is rotatably mounted on the bearing portion through big end rollers which are held at a distance from each other in circumferential direction about the centreline of the bearing portion through a cage, which has opposite retaining members for holding the big end rollers in axial direction thereof and a big end abutment between the eccentric member gear and the big end in axial direction of the crankpin axis so as to stop a movement of the big end with respect to the big end rollers in a direction from the bearing portion towards the eccentric member gear.

The big end rollers serve to minimize friction between the big end and the bearing portion of the eccentric member and to create a high durability and reliability. Furthermore, the big end rollers do not require high oil pressure for lubrication like sliding bearings and allow relatively small play which results in accurate meshing of the eccentric member gear with the gear train. Under operating conditions the big end abutment rotates about the centreline of the centreline of the bearing portion, about which the big end rotates, as well. This means that the big end moves along the big end abutment through a pure rotational movement, which advantageously minimizes friction between the big end abutment and the big end.

In a practical embodiment the big end abutment comprises an annular portion on one of the retaining members of the cage.

The big end abutment may be formed integral with the cage.

In an embodiment valleys between neighbouring teeth of the eccentric member gear have respective bottoms, which lie on an imaginary cylinder, wherein the big end abutment and a portion of the eccentric member gear outside the imaginary cylinder are spaced from each other in axial direction of the crankshaft axis when one of the retaining members of the cage abuts the eccentric member gear. This prevents the big end abutment from contacting the teeth of the eccentric member gear.

In a particular embodiment the gear train comprises an intermediate gear, being an external gear, which meshes with the eccentric member gear, an auxiliary gear, being an external gear, which meshes with the intermediate gear, wherein the auxiliary gear is fixed to an auxiliary shaft which extends concentrically through the main portion of the crankshaft and has a centreline that coincides with the crankshaft axis, wherein the crankshaft and the auxiliary shaft are rotatable with respect to each other, wherein the intermediate gear is mounted to the crank web and rotatable with respect thereto about an intermediate gear axis which in turn is parallel to the crankshaft axis.

Preferably, the eccentric member gear, the intermediate gear and the auxiliary gear are dimensioned such that under operating conditions, in case of a standstill of the auxiliary shaft with respect to the crankcase, the eccentric member is rotated with respect to the crankpin at half speed of the speed of the crankshaft with respect to the crankcase and in opposite direction thereof. This means that, if the crankshaft rotates twice about the crankshaft axis, the eccentric member rotates once about the crankpin in opposite direction. As seen from the crankcase the eccentric member rotates once about the centreline of the crankpin in the same rotational direction as the crankshaft.

The eccentric member gear may mesh with at least a further intermediate gear which also meshes with the auxiliary gear, wherein the further intermediate gear is mounted to the crank web and rotatable with respect thereto about a further intermediate gear axis which in turn is parallel to the crankshaft axis. This means that forces are distributed across both intermediate gears.

The eccentric member may be mounted on the crankpin through crankpin rollers.

The invention is also related to a cage for an internal combustion as described hereinbefore, wherein the cage has a first ring and a second ring which are parallel to each other and interconnected through bars, which bars are located at a distance from each other in circumferential direction of the first and second rings, hence providing spaces between neighbouring bars for receiving rollers, wherein the first ring has an outwardly directed protrusion which extends beyond the second ring as seen in radial direction from a common centreline of the first and second rings.

The protrusion may extend along the entire circumference of the first ring.

The first ring and the protrusion may be formed integral with each other.

In an embodiment freely rotatable rollers are accommodated in spaces between the neighbouring bars.

The invention will hereafter be elucidated with reference to very schematic drawings showing an embodiment of the invention by way of example.
Fig. 1 is a perspective view of a part of an embodiment of an internal combustion engine according to the invention.
Fig. 2 is an enlarged sectional view of a part of the embodiment as shown in Fig. 1.
Fig. 3 is an enlarged perspective view of a part of the embodiment as shown in Fig. 1.
Fig. 4 is an enlarged perspective view of another part of the embodiment as shown in Fig. 1.

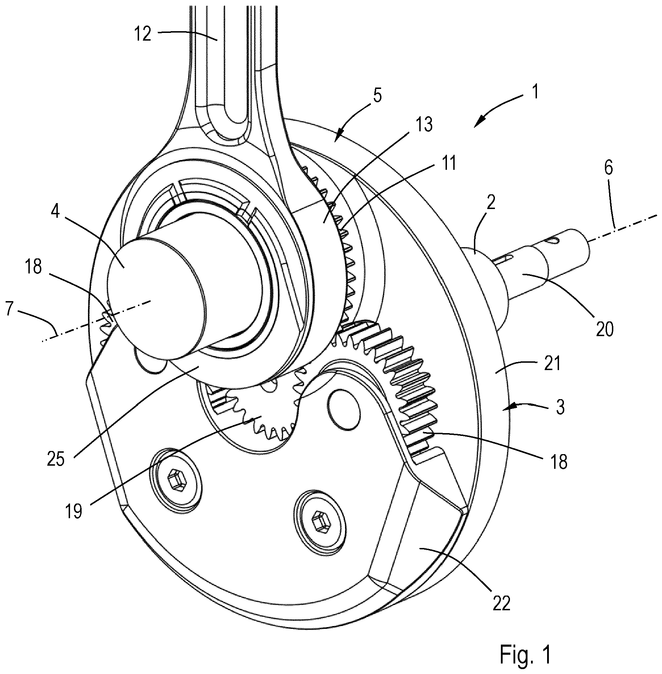

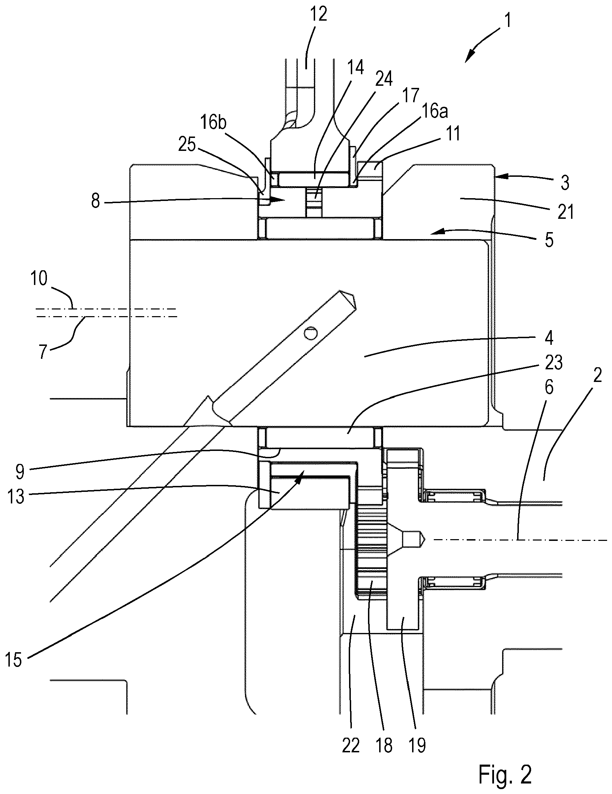

Figs. 1 and 2 show a part of an embodiment of an internal combustion engine 1 including variable compression ratio according to the invention. The internal combustion engine 1 is a one-cylinder four-stroke engine. The internal combustion engine 1 comprises a crankcase (not shown), which supports main portions 2 of a crankshaft 3. The crankshaft 3 also includes a crankpin 4 which is fixed to both main portions through crank webs 5. Each of the crank webs 5 is located between the adjacent main portion 2 of the crankshaft 3 and a supporting portion of the crankpin 4, in longitudinal direction of the crankshaft axis 6. The supporting portion of the crankpin 4 is located between the crank webs 5.

The crankshaft 3 is rotatable with respect to the crankcase about a crankshaft axis 6. The crankpin 4 has a centreline 7 and is fixed to at least one of the crank webs 5 through a press fitting, i.e. the crankshaft 3 is composed from different parts in a modular manner.

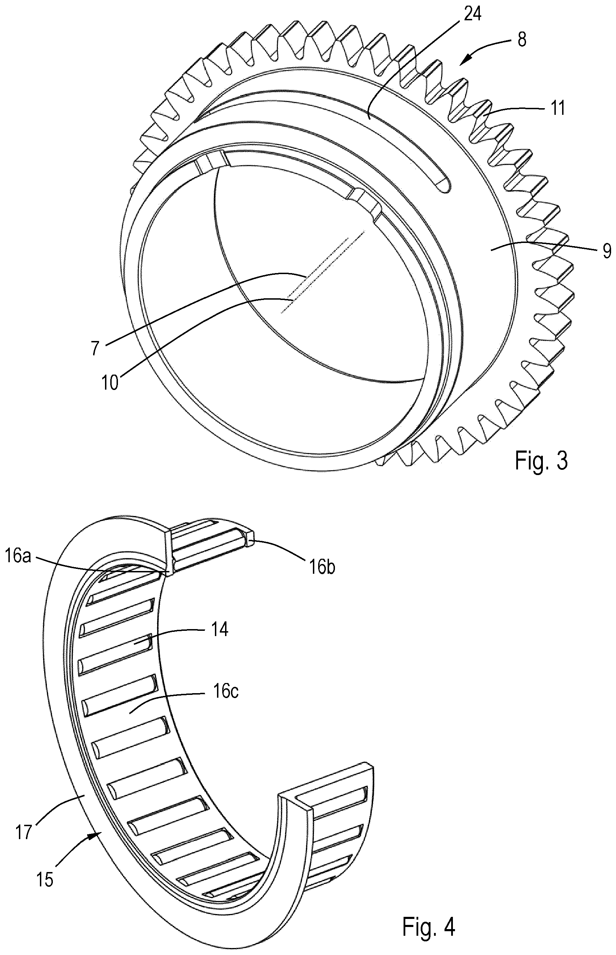

The internal combustion engine 1 is provided with an eccentric member 8, which is shown as a separate part in Fig. 3. The eccentric member 8 comprises a circular cylindrical bearing portion 9 including a centreline 10 and a circular cylindrical inner wall including a centreline which coincides with the centreline 7 of the crankpin 4. The centreline 10 of the bearing portion 9 is parallel to the centreline 7 of the crankpin 4, which means that they extend at a distance from each other. Hence, the bearing portion 9 and the inner wall are disposed eccentrically with respect to each other.

Furthermore, the eccentric member 8 is provided with an external eccentric member gear 11 between the bearing portion 9 and one of the crank webs 5 of the crankshaft 3 as seen in longitudinal direction of the crankshaft axis 6. The eccentric member gear 11 has a larger diameter than the bearing portion 9 and is drivably connected to a gear train for rotating the eccentric member 8 with respect to the crankpin 4.

The internal combustion engine 1 comprises a connecting rod 12 which has a big end 13 and a small end (not shown). The big end 13 is rotatably mounted on the bearing portion 9 through big end rollers 14. The big end rollers 14 are held at a distance from each other in circumferential direction about the centreline 10 of the bearing portion 9 through a cage 15, see Figs. 2 and 4.

The cage 15 has opposite retaining members in the form of a first ring 16a and a second ring 16b for holding the big end rollers 14 in place in axial direction thereof. The first ring 16a and the second ring 16b are parallel to each other and interconnected through bars 16c. The bars 16c are located at a distance from each other in circumferential direction of the first and second rings 16a, 16b. The big end rollers 14 are located in respective spaces between neighbouring bars 16c. Furthermore, the cage 15 is provided with a big end abutment 17 between the eccentric member gear 11 and the big end 13 so as to stop a movement of the big end 13 with respect to the big end rollers 14 in a direction from the bearing portion 9 towards the eccentric member gear 11.

In the embodiment as shown in Figs. 2 and 4 the big end abutment 17 comprises an annular portion which is fixed on the first ring 16a of the cage 15. The big end abutment 17 forms a protrusion which is directed outwardly from the first ring 16a and extends beyond the second ring 16b as seen in radial direction from a common centreline of the first and second rings 16a, 16b. The common centreline coincides with the centreline 10 of the bearing portion 9 when the cage 15 is part of the internal combustion engine 1. The big end abutment 17 in Fig. 4 is formed integrally with the first ring 16a, but it may also be a separate part which is fixed to the first ring 16a. The big end abutment 17 is only present at the first ring 16a, since a similar big end abutment at the second ring 16b would make assembly of the connecting rod 12 onto the big end rollers 14 impossible. Due to the fact that the crankshaft 3 is modular the big end 13 can be mounted onto the big end rollers 14 by moving it in axial direction across the big end rollers 14.

The eccentric member gear 11 has valleys between neighbouring teeth, which valleys have respective bottoms, which lie on an imaginary cylinder. The big end abutment 17 and a portion of the eccentric member gear 11 located at least outside the imaginary cylinder are spaced from each other in axial direction of the crankshaft axis 6 when the first ring 16a of the cage 15 abuts the eccentric member gear 11, see Fig. 2. This means that the teeth of the eccentric member gear 11 are always free from the big end abutment 17.

The gear train comprises two external intermediate gears 18. Front portions of the intermediate gears 18 mesh with the eccentric member gear 11, whereas rear portions of the intermediate gears 18 mesh with an external auxiliary gear 19. The auxiliary gear 19 is fixed to an auxiliary shaft 20 which extends concentrically through one of the main portions 2 of the crankshaft 3. The auxiliary shaft 20 has a centreline which coincides with the crankshaft axis 6. The crankshaft 3 and the auxiliary shaft 20 are rotatable with respect to each other.

The intermediate gears 18 are mounted to the crank web 5 and rotatable with respect thereto about respective intermediate gear axes which are parallel to the crankshaft axis. In the embodiment as shown in Figs. 1 and 2 the crank web 5 has a circular base 21 in which the crankpin 4 is fixed and a cover 22 which is fixed to the base 21. The intermediate gears 18 are located between the cover 22 and the base 21. Shafts of the intermediate gears 18 are fixed in both the base 21 and the cover 22, whereas the intermediate gears 18 are rotatable with respect to these shafts. Fig. 2 shows that the auxiliary gear 19, the intermediate gears 18 and the eccentric member gear 11 are mounted at the same side of the base 21 of the crank web 5. Fig. 2 also shows that the eccentric member gear 11 and the auxiliary gear 19 lie behind each other in longitudinal direction of the crankshaft axis 6, since they overlap each other. The cover 22 and/or the connecting rod 12 are shaped such that they do not touch each other when the internal combustion engine 1 is running. It is noted that the cover 22 may be relatively heavy such that it forms a significant part of a counterweight of the crankshaft 3.

The eccentric member gear 11, the intermediate gears 18 and the auxiliary gear 19 are dimensioned such that under operating conditions, in case of a standstill of the auxiliary shaft 20 with respect to the crankcase, the eccentric member 8 is rotated with respect to the crankpin 4 at half speed of the speed of the crankshaft 3 with respect to the crankcase and in opposite direction thereof. It is noted that in an alternative embodiment the front portion and the rear portion of each of the intermediate gears 18 may have different number of teeth.

The eccentric member 8 is mounted on the supporting portion of the crankpin 4 through crankpin rollers 23, which is possible because of the modular configuration of the crankshaft 3. Fig. 3 shows the eccentric member 8 as a separate part. It shows that the bearing portion 9 is provided with an elongate through-hole 24 extending in circumferential direction of the bearing portion 9 through which lubricant can flow from the crankpin 4 to the big end rollers 14. The through-hole 24 can also function as a balancing means of the eccentric member 8 since locally removed material influences weight distribution across the eccentric member 8.

Figs. 1 and 2 show a washer 25 for retaining the big end 13 and the second ring 16b of the cage 15 in axial direction of the crankpin axis 7 in a direction from the eccentric member gear 11 towards the bearing portion 9. The washer 25 may be clamped onto the eccentric member 8, which is possible during assembly after mounting the connecting rod 12 onto the big end rollers 14.

The invention is not limited to the embodiment shown in the drawings and described hereinbefore, which may be varied in different manners within the scope of the claims and their technical equivalents.

## Claims

1. An internal combustion engine (1) including variable compression ratio comprising a crankcase, a crankshaft (3) including a main portion (2) which is supported by the crankcase and rotatable thereto about a crankshaft axis (6), a crankpin (4) and a crank web (5) located between the main portion (2) and the crankpin (4) in longitudinal direction of the crankshaft axis (6), a connecting rod (12) including a big end (13), an eccentric member (8) which is mounted on the crankpin (4) and rotatable with respect to the crankpin (4) about a crankpin axis (7), wherein the eccentric member (8) comprises a bearing portion (9) including a centreline (10) parallel to the crankpin axis (7) and an external eccentric member gear (11) between the bearing portion (9) and the crank web (5) of the crankshaft (3) as seen in longitudinal direction of the crankshaft axis (6), which eccentric member gear (11) has a larger diameter than the bearing portion (9) and is drivably connected to a gear train (18, 19) for rotating the eccentric member (8) with respect to the crankpin (4), **characterized in that** the big end (13) is rotatably mounted on the bearing portion (9) through big end rollers (14) which are held at a distance from each other in circumferential direction about the centreline (10) of the bearing portion (9) through a cage (15), which has opposite retaining members (16a, 16b) for holding the big end rollers (14) in axial direction thereof and a big end abutment (17) between the eccentric member gear (11) and the big end (13) in axial direction of the crankpin axis (7) so as to stop a movement of the big end (13) with respect to the big end rollers (14) in a direction from the bearing portion (9) towards the eccentric member gear (11).

2. An internal combustion engine (1) according to claim 1, wherein the big end abutment comprises an annular portion (17) on one of the retaining members (16a) of the cage (15) .

3. An internal combustion engine (1) according to claim 1 or 2, wherein the big end abutment (17) is formed integral with the cage (15).

4. An internal combustion engine (1) according to any one of the preceding claims, wherein valleys between neighbouring teeth of the eccentric member gear (11) have respective bottoms, which lie on an imaginary cylinder, wherein the big end abutment (17) and a portion of the eccentric member gear (11) outside the imaginary cylinder are spaced from each other in axial direction of the crankshaft axis (6) when one of the retaining members (16a) of the cage (15) abuts the eccentric member gear (11).

5. An internal combustion engine (1) according to any one of the preceding claims, wherein the gear train comprises an intermediate gear (18), being an external gear, which meshes with the eccentric member gear (11), an auxiliary gear (19), being an external gear, which meshes with the intermediate gear (18), wherein the auxiliary gear (19) is fixed to an auxiliary shaft (20) which extends concentrically through the main portion (2) of the crankshaft (3) and has a centreline that coincides with the crankshaft axis (6), wherein the crankshaft (3) and the auxiliary shaft (20) are rotatable with respect to each other, wherein the intermediate gear (18) is mounted to the crank web (5) and rotatable with respect thereto about an intermediate gear axis which in turn is parallel to the crankshaft axis (6).

6. An internal combustion engine (1) according to claim 5, wherein the eccentric member gear (11), the intermediate gear (18) and the auxiliary gear (19) are dimensioned such that under operating conditions, in case of a standstill of the auxiliary shaft (20) with respect to the crankcase, the eccentric member (8) is rotated with respect to the crankpin (4) at half speed of the speed of the crankshaft (3) with respect to the crankcase and in opposite direction thereof.

7. An internal combustion engine (1) according to claim 5 or 6, wherein the eccentric member gear (11) meshes with at least a further intermediate gear (18) which also meshes with the auxiliary gear (19), wherein the further intermediate gear (18) is mounted to the crank web (5) and rotatable with respect thereto about a further intermediate gear axis which in turn is parallel to the crankshaft axis (6).

8. An internal combustion engine (1) according to any one of the preceding claims, wherein the eccentric member (8) is mounted on the crankpin (4) through crankpin rollers (23).

9. A cage (15) for an internal combustion according to any one of the preceding claims, wherein the cage (15) has a first ring (16a) and a second ring (16a) which are parallel to each other and interconnected through bars (16c), which bars (16c) are located at a distance from each other in circumferential direction of the first and second rings (16a, 16b), hence providing spaces between neighbouring bars (16c) for receiving rollers (14), wherein the first ring (16a) has an outwardly directed protrusion (17) which extends beyond the second ring (16b) as seen in radial direction from a common centreline of the first and second rings (16a, 16b).

10. A cage (15) according to claim 9, wherein the protrusion (17) extends along the entire circumference of the first ring (16a).

11. A cage (15) according to claim 9 or 10, wherein the first ring (16a) and the protrusion (17) are formed integral with each other.

12. A cage (15) according to any one of the claims 9-11, wherein freely rotatable rollers (14) are accommodated in spaces between the neighbouring bars (16c).
